# EUROPÄISCHE PATENTSCHRIFT

(11) **EP 0 620 067 B1**
(45) Veröffentlichungstag und Bekanntmachung des Hinweises auf die Patenterteilung: **08.11.1995**
(21) Anmeldenummer: 93105909.1
(22) Anmeldetag: 10.04.1993
(51) Int. Cl.: B23B 31/02

(54) **Spannelement**
Clamping device
Elément de bloquage

(43) Veröffentlichungstag der Anmeldung: 19.10.1994
(73) Patentinhaber: Weger, Udo, Dipl.-Ing. (FH), W-85135 Titting-Emsing (DE)
(72) Erfinder: Weger, Udo, Dipl.-Ing. (FH), W-85135 Titting-Emsing (DE)
(74) Vertreter: Sasse, Volker, Dipl.-Ing.

(56) Entgegenhaltungen:
- EP-B- 0 164 582
- DE-A- 2 539 640
- FR-A- 908 573

## Beschreibung

Die Erfindung betrifft ein Spannelement der im Oberbegriff des Patentanspruchs 1 angegebenen Art.

Bei einem aus EP 0164582 B1 bekannten Spannelement dieser Art sind zwischen der Spannhülse und der Zylinderbohrung und zwischen dem Schaft des Werkstücke oder Werkzeuge und der Aufnahmebohrung in der Spannhülse hydraulisch betätigbare Manschetten vorgesehen. Die eine Manschette spannt bei Druckbeaufschlagung von innen die Spannhülse in der Zylinderbohrung fest. Die andere Manschette spannt bei Druckbeaufschlagung von außen den Schaft in der Aufnahmebohrung fest. Als Drehpositioniervorrichtung dient ein Axialstift, der in einer Bohrung eines Bundes der Spannhülse axialverschieblich und in jeweils eine von in Umfangsrichtung verteilten Sackbohrungen in der Stirnseite des Grundkörpers einsteckbar ist. Zur axialen Festlegung der Spannhülse in der Zylinderbohrung ist ein Keil-Spannmechanismus vorgesehen, der längs durchbohrt ist. Bei einer weiteren Ausführungsform des bekannten Spannelementes ist zwischen der Spannhülse und der Zylinderbohrung eine verdrehbare Exzenterbuchse eingesetzt, um die Zylinderbohrung zentrisch zur Achse des Grundkörpers anordnen zu können. Bei einer weiteren Ausführungsform sind zwei Exzenterbuchsen zwischen der Wand der Zylinderbohrung und dem Außenmantel der Spannhülse vorgesehen, um sowohl die Zylinderbohrung als auch die Aufnahmebohrung in der Spannhülse jeweils zentrisch In Bezug auf die Rotationsachse des Grundkörpers beziehungsweise der Spannhülse anordnen zu können.

Bei einem aus FR-908573 bekannten Spannelement ist die Aufnahmebohrung des Spannelementes konisch ausgebildet, so daß sich hier nur solche Teile spannen lassen, die einen entsprechenden Gegenkonus-Ansatz besitzen. Bei derartigen Konusverbindungen ist das übertragbare Drehmoment unerwünscht begrenzt.

Spannelemente der vorerwähnten Art werden zum zentrischen Spannen rotierender Teile wie Werkstücke oder Werkzeuge benutzt, bei denen ein Achsversatz zwischen einer Rotationsachse des Grundkörpers und der Achse des eingespannten Teils ausgeglichen werden muß. Dies ermöglicht einen Rundlaufausgleich, das heißt eine Zentrierung des gespannten Werkstücks oder Werkzeugs zum schlagfreien Lauf auch in solchen Fällen, In denen das Spannelement selbst nicht absolut zentrisch, zum Beispiel in einer Werkzeugmaschinenspindel, läuft und sich dadurch ein Achsversatz zwischen der Rotationsachse des Spannelements und des eingespannten Teils ergibt.

Der Erfindung liegt die Aufgabe zugrunde, ein Spannelement der eingangs genannten Art zu schaffen, das aus wenigen Einzelteilen besteht, kostengünstig und einfach herstellbar ist und einen exakten Achsversatzausgleich ermöglicht, wobei alle zylindrischen Schäfte, zum Beispiel gemäß DIN 1835 und 6535 zur Übertragung hoher Drehmomente eingespannt werden können.

Die gestellte Aufgabe wird erfindungsgemäß mit den im kennzeichnenden Teil des Patentanspruchs 1 angegebenen Merkmalen gelöst.

Das Spannelement besteht aus nur wenigen Einzelteilen, die direkt miteinander kooperieren und für eine einwandfreie Einspannung zylindrischer Schäfte einerseits, einen weiteren Ausgleichsbereich für Achsversatz andererseits und für die Übertragung hoher Drehmomente sorgen. Die Umfangsverzahnung in der Drehpositionier-Vorrichtung ermöglicht einerseits eine sehr feingestufte Drehverstellung der Spannhülse und andererseits eine spielfreie Positionierung der Spannhülse im Betrieb. Die Radialspannvorrichtung ist mechanischer Bauart, funktionssicher und trägt zu einer einfachen und kompakten Bauweise des Spannelements bei.

Bei der Ausführungsform gemäß Anspruch 2 wird über die gewählten Ausmaße der Exzentrizitäten ein großer Bereich zum Ausgleichen eines Achsversatzes erreicht, wobei die jeweils erforderliche Einstellung dank der Umfangsverzahnung der Spannhülse sehr feinfühlig und feinstufig durchführbar ist. Die Ausmaße der Exzentrizitäten könnten auch gleich sein.

Bei der Ausführungsform gemäß Anspruch 3 wird der Schaft des Werkstücks oder des Werkzeugs dank des Radialschlitzes der Spannhülse über die Radialspannvorrichtung gleichmäßig und fest und rasch gespannt.

Eine gleichmäßige Verteilung der Spannkraft sowohl in Umfangsrichtung als auch in Axialrichtung der Spannhülse ist bei der Ausführungsform gemäß Anspruch 4 erreichbar.

Alternativ ist die Ausführungsform gemäß Anspruch 5 zweckmäßig, bei der mehrere gegenläufige Schlitze, die in radialer Richtung durch Bohrungen begrenzt sind, für die notwendige Verformbarkeit der Spannhülse sorgen, ohne den genauen Sitz des Schaftes zu gefährden.

Eine baulich und herstellungstechnisch einfache Ausführungsform geht aus Anspruch 6 hervor.

Bei der Ausführungsform gemäß Anspruch 7 ist im Betrieb die Spannhülse gegen ein Herausgleiten aus der Zylinderbohrung gesichert. Sind in der Drehpositioniervorrichtung ineinandergreifende Verzahnungen vorgesehen, dann muß die Sicherungsschraube vor dem Verdrehen der Spannhülse gelöst werden. Ist hingegen ein Axialstift vorgesehen, dann läßt sich die Spannhülse nur nach Lockern der Sicherungsschraube und Herausziehen des Axialstiftes leicht verdrehen.

Zusätzlich ist die Maßnahme von Anspruch 8 wichtig, weil der Sicherungs- und Dichtungsring einerseits das unwillkürliche Herausfallen der Spannhülse bei vertikel gehaltenem Spannelement verhindert und auch einen gewissen Drehwiderstand und Schiebewiderstand erzeugt, der für die Manipulation bei den Einstellarbeiten günstig ist, andererseits die Zylinderbohrung gegenüber der Spannhülse derart abdichtet, daß weder Kühlmittel austreten noch Schmutz in die innere Führung eindringen kann.

Die Ausführungsform gemäß Anspruch 9 ist baulich einfach und ermöglicht die gewünschte feinstufige Drehverstellung und genaue Festlegung der Spannhülse.

Die alternative Ausführungsform gemäß Anspruch 10 ermöglicht ebenfalls eine feinstufige Drehverstellung der Spannhülse, wobei der Axialstift in die Radialschlitze der Umfangsverzahnung eingreift und eine spielfreie Positionierung der Spannhülse besorgt.

Bei der Ausführungsform gemäß Anspruch 11 ist es möglich, mittels des Längenanschlagskörpers die Einschiebtiefe des Schaftes in die Aufnahmebohrung zu begrenzen, bzw. in der jeweils gewünschten Weise einzustellen. Zu diesem Zweck wird der Längenanschlagskörper mittels der Axial-Verstellvorrichtung in die jeweils erforderliche Position gebracht. Zweckmäßigerweise ist die Axial-Verstellvorrichtung selbsthemmend, so daß sich der Längenanschlagskörper nicht selbständig zu verstellen vermag.

Bei der Ausführungform gemäß Anspruch 12 ist trotz des Längenanschlagskörpers eine unbehinderte Kühlschmierstoffzufuhr ermöglicht, wie sie für besondere Anwendungsfälle erforderlich ist. Die Querschlitze lassen den Eintritt des Kühlschmierstoffs auch dann zu, wenn der Schaft bündig an der Stirnseite des Längenanschlagkörpers anliegt.

Bei der Ausführungsform gemäß Anspruch 13 ist eine besonders einfache und wirkungsvolle Axialverstellvorrichtung vorgesehen.

Gemäß Anspruch 14 wird die Vorspannung durch eine Feder, vorzugsweise eine Tellerfeder erzeugt, die die selbsthemmenden Halterungseigenschaften für den Längenanschlagskörper sicherstellt.

Anhand der Zeichnungen wird beispielhaft eine Ausführungsform des Erfindungsgegenstandes erläutert. Es zeigt:
- Fig. 1: einen Längsschnitt eines Spannelements,
- Fig. 2: eine Stirnansicht des Spannelements von Figur 1 von links,
- Fig. 3: eine Stirnansicht des Spannelements von Figur 1 von rechts, und
- Fig. 4: einen Querschnitt in Figur 1 (Schnitt Ebene I-I).

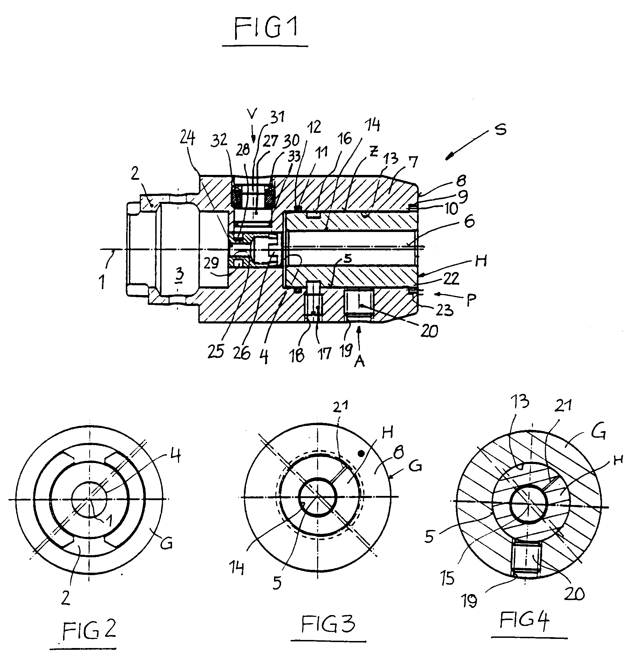

Ein Spannelement S gemäß Figur 1 bis 4 weißt einen annähernd tonnenförmigen Grundkörper G mit einer Längsachse 1 auf. Der Grundkörper G wird an seinem hinteren Endteil 2 auf übliche Weise festgelegt oder gehalten und weißt einen Hohlraum 3 auf, der sich vom hinteren Ende bis zum vorderen Ende des Grundkörpers G erstreckt. Vom Hohlraum 3 führt eine zentrische Durchgangsbohrung 4 zu einer Zylinderbohrung Z, deren Innenwandung mit 5 bezeichnet ist. Die Achse 6 der Zylinderbohrung Z ist parallel und exzentrisch bezüglich der Achse 1 des Grundkörpers G. Die Zylinderbohrung Z erstreckt sich innerhalb eines Vorderendes 7 des Grundkörpers G bis zu dessen Stirnseite 8. In der Stirnseite 8 ist eine Aufweitung 9 der Zylinderbohrung Z eingeformt, in der eine Gegenverzahnung 10 in Umfangsrichtung umläuft. In einem innenliegenden, umlaufenden Einstich 11 der Zylinderbohrung Z ist ein Sicherungs- und Dichtungsring 12, zum Beispiel ein O-Ring, untergebracht, der nicht nur die Spannhülse H gegen Herausrutschen sichert, sondern den Sitz gegen Austritt von Kühlmittelflüssigkeit und Eintritt von Schmutz dicht verschließt.

In der Zylinderbohrung Z ist eine Spannhülse H verdrehbar gelagert, deren Außenmantel 13 eine Zylinderachse hat, die mit der Achse 6 der Zylinderbohrung Z zusammenfällt. In der Spannhülse H ist eine zylindrische Aufnahmebohrung 14 vorgesehen, deren Achse 15 parallel und exzentrisch zur Achse 6 angeordnet ist. Im Außenmantel 14 ist ein umlaufender EInstich 16 vorgesehen, in den eine Sicherungsschraube 17 eingreift, die in eine Gewindebohrung 18 des Grundkörpers G eingeschraubt ist.

Eine Radial-Spannvorrichtung A für die Spannhülse H besteht aus einer Madenschraube 20, die in einer Gewindebohrung 19 des Grundkörpers G soweit einschraubbar ist, daß sie gegen den Außenmantel 13 der Spannhülse H drückt und diese verformt. Die Spannhülse H besitzt wenigstens einen längsdurchgehenden Radialschlitz 21, um einen nicht dargestellten Schaft eines Werkstücks oder Werkzeugs, der in die Aufnahmebohrung 14 eingeschoben ist, zu spannen.

Es ist denkbar, zusätzlich zum Radialschlitz 21 mehrere in Umfangsrichtung verteilte, längsverlaufende Axialnuten vorzusehen, die entweder innen und/oder außen an der Spannhülse H vorgesehen sind. Ferner ist es denkbar, anstelle des Radialschlitzes und der Axialnuten mehrere gegenläufige Schlitze in der Spannhülse H vorzusehen, die in radialer Richtung durch eine oder durch jeweils eine radiale Bohrung begrenzt werden und für die zum Spannen notwendige Verformbarkeit der Spannhülse H sorgen. Der Radialschlitz 21 ist in den Figuren 3 und 4 gut zu erkennen.

Ferner ist eine Drehpositionier-Vorrichtung P für die Spannhülse H vorgesehen. Zu diesem Zweck ist an der Spannhülse H ein äußerer Bund 22 angeformt, der eine Umfangsverzahnung 23 trägt, die mit der Gegenverzahnung 10 in der Aufweitung 9 des Grundkörpers G in Eingriff bringbar ist. Die ineinandergreifenden Verzahnungen haben zweckmäßigerweise axial ausgerichtete Zahnkämme, so daß sich der Verzahnungseingriff durch axiales Herausziehen der Spannhülse H lösen und durch achsiales Hineindrücken der Spannhülse H wieder herstellen läßt. Zweckmäßigerweise ist die Zahnteilung sehr eng, so daß sich eine feinstufige Verstellung erzielen läßt. Außerdem wird über die Verzahnung eine drehfeste Halterung der Spannhülse H in der Zylinderbohrung Z erreicht, über die ein hohes Drehmoment übertragbar ist.

In der Durchgangsbohrung 4, deren Durchmesser in etwa gleich dem Durchmesser der Aufnahmebohrung 14 ist, ist ein Längenanschlagskörper 24 axial verstellbar angeordnet, in dem eine Innenbohrung 25 und stirnseitige Querschlitze 26 vorgesehen sind, die einen Kühlschmierstoffkanal vom Hohlraum 3 bis in die Aufnahmebohrung 14 ergänzen. Der Längenanschlagskörper 24 besitzt einen Umfangseinstich, der als umlaufende Ausnehmung 29 angedeutet ist. Zum Axialverstellen des Längenanschlagskörpers 24 dient eine Axialverstellvorrichtung V, die einen Drehkolben 27 mit einem exzentrischen Mitnehmer 28 aufweist, der in die Ausnehmung 29 eingreift. Ein Betätigungsteil 31 des Drehkolbens 27 ist von außerhalb des Grundkörpers G zugänglich. Der Drehkolben 27 wird durch eine Hohlschraube 30 In einer Gewindebohrung mit anschließender Paßbohrung abgestützt und unter federnder Vorspannung gegen den Längenanschlagskörper 24 gedrückt. Zum Andrücken dient eine Feder 32, die zweckmäßigerweise eine Tellerfeder mit geringer Bauhöhe ist.

In Figur 2 ist der hintere Endteil 2 des Grundkörpers G mit der Durchgangsbohrung 4 erkennbar. In Figur 3 ist die Stirnseite 8 des Grundkörpers G mit der Aufnahmebohrung 14 der Spannhülse H und deren exzentrische Achse 15 angedeutet. In Figur 4 ist die auf den Außenmantel 13 der Spannhülse H einwirkende Madenschraube 20 erkennbar.

## Patentansprüche

1. Spannelement (S), mit einem rotationssymmetrischen Grundkörper (G), in dem parallel und exzentrisch zu seiner Achse (1) eine Zylinderbohrung (Z) für eine wahlweise verdrehbare Spannhülse (H) vorgesehen ist, die einen zylindrischen Außenmantel (13) und eine zur Zylinderachse (6) des Außenmantels (13) parallel exzentrische, zylindrische Aufnahmebohrung (14) für einen annähernd zylindrischen Schaft eines Werkzeugs oder eines Werkstücks aufweist, mit einer wahlweise betätigbaren Radialspannvorrichtung (A) für die Spannhülse (H), und mit einer formschlüssigen, lösbaren Drehpositionier-Vorrichtung (P) zwischen dem Grundkörper (G) und der Spannhülse (H), dadurch gekennzeichnet, daß die Spannhülse (H) mit ihrem Außenmantel (13) direkt an der Innenwand (5) der Zylinderbohrung (Z) anliegt, daß die Radialspannvorrichtung (A) der Spannhülse (H) mechanisch ausgebildet und mit einem Zugang zur Zylinderbohrung (Z) im Grundkörper (G) vorgesehen ist, und daß die Drehpositionier-Vorrichtung (P) wenigstens eine Umfangsverzahnung (23) an der Spannhülse (H) aufweist, in die entweder eine Gegenverzahnung (10) oder ein Axialstift des Grundkörpers (G) zum Eingriff bringbar ist.

2. Spannelement nach Anspruch 1, dadurch gekennzeichnet, daß die Ausmaße der Exzentrizitäten der Aufnahmebohrung (14) und der Zylinderbohrung (Z) verschieden sind, vorzugsweise derart, daß das Ausmaß der Exzentrizität der Aufnahmebohrung (14) mindestens dem Ausmaß der Exzentrizität der Zylinderbohrung (Z) entspricht.

3. Spannelement nach Anspruch 1, dadurch gekennzeichnet, daß die Spannhülse (H) einen längsverlaufenden, in etwa radial vom Außenmantel (13) bis zur Aufnahmebohrung (14) durchgehenden Schlitz (21) aufweist.

4. Spannelement nach Anspruch 3, dadurch gekennzeichnet, daß in der Spannhülse (H) zusätzlich zum Schlitz (21) innen und/oder außen mehrere Axialnuten vorgesehen sind.

5. Spannelement nach einem der Ansprüche 1 bis 3, dadurch gekennzeichnet, daß die Spannhülse (H) mehrere, In Umfangsrichtung verteilte, gegenläufige Schlitze aufweist, die in radialer Richtung durch eine, vorzugsweise radiale, Bohrung begrenzt sind.

6. Spannelement nach Anspruch 1, dadurch gekennzeichnet, daß als Radialspannvorrichtung (A) wenigstens eine Madenschraube (20) in einer von der Außenseite des Grundkörper (G) bis in die Zylinderbohrung (Z) reichenden Gewindebohrung (19) vorgesehen ist.

7. Spannelement nach mindestens einem der Ansprüche 1 bis 3 und 5, dadurch gekennzeichnet, daß im Außenmantel (13) der Spannhülse (H) ein umlaufender Einstich (16) vorgesehen ist, in den zur Axialsicherung der Spannhülse (H) eine in einer radialen Gewindebohrung (18) des Grundkörpers (G) enthaltene Sicherungsschraube (17) eingreift.

8. Spannelement nach Anspruch 1 oder 2, dadurch gekennzeichnet, daß in der Zylinderbohrung (Z) ein Sicherungs- und Dichtungsring (12), zum Beispiel ein O-Ring, zum axialen Halten der Spannhülse (H) sowie als Dichtungsmittel gegen Austritt von Kühlmittel bzw. gegen Eindringen von Schmutz dient, vorgesehen ist.

9. Spannelement nach mindestens einem der Ansprüche 1 bis 3, 5 und 7, dadurch gekennzeichnet, daß die Spannhülse (H) an einer Stirnseite, vorzugsweise an einem umlaufenden äußeren Punkt (22), die Umfangsverzahnung (23) mit axialen Zahnkämmen (11) aufweist, und daß die Zylinderbohrung (Z) am Einsteckende eine Aufweitung (9) mit der Gegenverzahnung (10) aufweist, mit der bei annähernd bündigem Abschluß zwischen der Stirnseite der Spannhülse (H) und der Stirnseite (8) des Grundkörpers (G) die Umfangsverzahnung (23) im Eingriff steht.

10. Spannelement nach mindestens einem der Ansprüche 1 bis 3, 5, 7, 9, dadurch gekennzeichnet, daß die Spannhülse (H) einen stirnseitigen, das Einsteckende der Zylinderbohrung (Z) nach außen übergreifenden Bund aufweist, der die Umfangsverzahnung (23) aus regelmäßigen Winkelabständen, vorzugsweise zwischen 10 Grad und 30 Grad, trägt und mindestens einen nach außen offenen Radialschlitz (21) aufweist, und daß der Axialstift in der Stirnseite (8) des Grundkörpers (G) angebracht ist und mit einem Paß-Sitz in jeweils einen Radialschlitz eingreift.

11. Spannelement nach wenigstens einem der Ansprüche 1 bis 10, dadurch gekennzeichnet, daß im Grundkörper (G) in einer zentrischen und die Zylinderbohrung (Z) verlängernden Durchgangsbohrung (4) ein Längenanschlagskörper (24) vorgesehen ist und daß der Längenanschlagskörper (24) mit einer seitlich im Grundkörper (G) gelagerten, von außen betätigbaren Axial-Verstellvorrichtung (V) gekoppelt ist.

12. Spannelement nach Anspruch 11, dadurch gekennzeichnet, daß der Längenanschlagskörper (24) eine Innenbohrung (25) und, vorzugsweise, an seiner der Spannhülse (H) zugewandten Stirnseite seitliche und mit der Innenbohrung (25) verbundene KühlmittelQuerschlitzes (26) aufweist.

13. Spannelement nach Anspruch 11, dadurch gekennzeichnet, daß die Axialverstellvorrichtung (V) einen Drehkolben (27) mit annähernd zur Durchgangsbohrung (4) radialer Kolbendrehachse aufweist, an dem exzentrisch zur Kolbendrehachse ein in eine Ausnehmung (29) des Längenanschlagskörpers (24) eingreifenden Mitnehmer (28) angebracht ist, und daß der Drehkolben (27) radial abgestützt und mit Vorspannung gegen den Längenanschlagskörper (24) gedrückt ist.

14. Spannelement nach Anspruch 13, dadurch gekennzeichnet, daß der Drehkolben (27) von einer Hohlschraube (30) abgestützt ist, und das zwischen der Hohlschraube (30) und dem Drehkolben (27) eine Feder (32), vorzugsweise eine Tellerfeder, angeordnet ist.

## Claims

1. Clamping element (S), having a rotationally symmetrical basic body (G) in which a cylindrical bore (Z) is provided in parallel and eccentrically relative to its axis (1) for a selectively rotatable clamping sleeve (H) which has a cylindrical outer casing (13) and a cylindrical receiving bore (14), which is parallel and eccentric to the cylinder axis (6) of the outer casing (13), for an approximately cylindrical shank of a tool or a workpiece, having a selectively actuable radial clamping device (A) for the clamping sleeve (H), and having a positive-locking, releasable rotary-positioning device (P) between the basic body (G) and the clamping sleeve (H), characterized in that the clamping sleeve (H) bears with its outer casing (13) directly against the inner wall (5) of the cylindrical bore (Z), in that the radial clamping device (A) of the clamping sleeve (H) is of mechanical design and is provided in the basic body (G) with an access to the cylindrical bore (Z), and in that the rotary-positioning device (P) has at least one peripheral toothing (23) on the clamping sleeve (H), into which toothing either a counter-toothing (10) or an axial pin of the basic body (G) can be brought into engagement.

2. Clamping element according to Claim 1, characterized in that the dimensions of the eccentricities of the receiving bore (14) and of the cylindrical bore (Z) are different, preferably in such a way that the dimension of the eccentricity of the receiving bore (14) corresponds at the least to the dimension of the eccentricity of the cylindrical bore (Z).

3. Clamping element according to Claim 1, characterized in that the clamping sleeve (H) has a longitudinally extending slit (21) which passes approximately radially from the outer casing (13) to the receiving bore (14).

4. Clamping element according to Claim 3, characterized in that a plurality of axial grooves are provided on the inside and/or on the outside of the clamping sleeve (H) in addition to the slit (21).

5. Clamping element according to one of Claims 1 to 3, characterized in that the clamping sleeve (H) has a plurality of slits which are distributed in the circumferential direction, run in opposite directions, and are bounded in the radial direction by a, preferably radial, bore.

6. Clamping element according to Claim 1, characterized in that at least one grub screw (20) is provided as a radial clamping device (A) in a threaded bore (19) which extends from the outer side of the basic body (G) right into the cylindrical bore (Z).

7. Clamping element according to at least one of Claims 1 to 3 and 5, characterized in that a circumferential incision (16) is provided in the outer casing (13) of the clamping sleeve (H), in which incision a securing screw (17) engages to secure the clamping sleeve (H) axially, said securing screw being contained in a radial threaded bore (18) of the basic body (G).

8. Clamping element according to Claim 1 or 2, characterized in that a securing and sealing ring (12), for example an O-ring, is provided in the cylindrical bore (Z), which ring serves to hold the clamping sleeve (H) axially and serves as a sealing means to counter the escape of coolant or the entry of dirt.

9. Clamping element according to at least one of Claims 1 to 3, 5 and 7, characterized in that the clamping sleeve (H) has the circumferential toothing (23) with axial tooth combs (11) at one end face, preferably at a circumferential outer point (22), and in that the cylindrical bore (Z) has, at the insertion end, a widening (9) with the counter-toothing (10) with which the circumferential toothing (23) is engaged when there is an approximately flush termination between the end face of the clamping sleeve (H) and the end face (8) of the basic body (G).

10. Clamping element according to at least one of Claims 1 to 3, 5, 7, 9, characterized in that the clamping sleeve (H) has an end-face collar which engages outwards over the insertion end of the cylindrical bore (Z), bears the circumferential toothing (23) at regular angular intervals, preferably between 10 degrees and 30 degrees, and has at least one radial slit (21) open outwards, and in that the axial pin is mounted in the end face (8) of the basic body (G) and engages with a snug fit in each case in a radial slit.

11. Clamping element according to at least one of Claims 1 to 10, characterized in that a longitudinal stop body (24) is provided in the basic body (G) in a central through-bore (4) which extends the cylindrical bore (Z), and in that the longitudinal stop body (24) is coupled to an axial adjustment device (V) which is mounted laterally in the basic body (G) and can be actuated from the outside.

12. Clamping element according to Claim 11, characterized in that the longitudinal stop body (24) has an internal bore (25) and, preferably at its end face facing the clamping sleeve (H), lateral coolant cross-slots (26) connected to the internal bore (25).

13. Clamping element according to Claim 11, characterized in that the axial adjustment device (V) has a rotary piston (27) with an axis of rotation which is approximately radial relative to the through-bore (4), on which rotary piston a carrier (28) is mounted eccentrically relative to the axis of rotation of the piston, said carrier engaging in a recess (29) in the longitudinal stop body (24), and in that the rotary piston (27) is supported radially and is pressed with prestress against the longitudinal stop body (24).

14. Clamping element according to Claim 13, characterized in that the rotary piston (27) is supported by a hollow screw (30), and in that a spring (32), preferably a plate spring, is arranged between the hollow screw (30) and the rotary piston (27).

## Revendications

1. Elément de blocage (S), avec un corps de base (G) à symétrie de révolution, dans lequel est prévu, de manière parallèle et excentrée par rapport l'axe (1) du corps précité, un alésage de cylindre (Z) pour une douille de serrage (H) dotée d'une possibilité de rotation sélective, cette douille présentant une enveloppe externe cylindrique (13) et un trou de fixation cylindrique (14), parallèle à l'axe de cylindre (6) de l'enveloppe externe (13) et excentré par rapport à cet axe, pour une tige à peu près cylindrique d'un outil ou d'une pièce, avec un dispositif de serrage radial (A), actionnable sélectivement, pour la douille de serrage (H), et avec un dispositif de positionnement de rotation (P) à verrouillage de forme libérable entre le corps de base (G) et la douille de serrage (H), caractérisé en ce que la douille de serrage (H) s'applique directement par son enveloppe externe (13) sur la paroi interne (5) de l'alésage de cylindre (Z), en ce que le dispositif de serrage radial (A) de la douille de serrage (H) a une réalisation mécanique et est prévu avec un accès à l'alésage de cylindre (Z) du corps de base (G), et en ce que le dispositif de positionnement de rotation (P) présente au moins une denture périphérique (23) sur la douille de serrage (H), dans laquelle peut être engagée une contre-denture (10) ou une goupille axiale du corps de base (G).

2. Elément de blocage suivant la revendication 1, caractérisé en ce que les valeurs des excentricités du trou de fixation (14) et de l'alésage de cylindre (Z) sont différentes, de préférence de sorte que la valeur de l'excentricité du trou de fixation (14) correspond au moins à la valeur de l'excentricité de l'alésage de cylindre (Z).

3. Elément de blocage suivant la revendication 1, caractérisé en ce que la douille de serrage (H) présente une fente (21) s'étendant dans le sens longitudinal, à peu près continue dans le sens radial de l'enveloppe externe (13) jusqu'au trou de fixation (14).

4. Elément de blocage suivant la revendication 3, caractérisé en ce que plusieurs rainures axiales sont prévues à l'intérieur et/ou à l'extérieur dans la douille de serrage (H), en supplément de la fente (21).

5. Elément de blocage suivant l'une quelconque des revendications 1 à 3, caractérisé en ce que la douille de serrage (H) présente plusieurs fentes de sens contraire, réparties dans le sens périphérique et limitées dans le sens radial par un trou, radial de préférence.

6. Elément de blocage suivant la revendication 1, caractérisé en ce qu'une vis sans tête (20), au moins, est prévue comme dispositif de serrage radial (A) dans un taraudage (19), qui s'étend du côté externe du corps de base (G) jusque dans l'alésage de cylindre (Z).

7. Elément de blocage suivant l'une au moins des revendications 1 à 3 et 5, caractérisé en ce qu'une gorge périphérique (16) est prévue dans l'enveloppe externe (13) de la douille de serrage (H), gorge dans laquelle s'engage une vis d'arrêt (17), contenue dans un taraudage radial (18) du corps de base (G), pour le blocage axial de la douille de serrage (H).

8. Elément de blocage suivant l'une des revendications 1 ou 2, caractérisé en ce qu'une bague d'arrêt et d'étanchéité (12), un joint torique par exemple, est prévue dans l'alésage de cylindre (Z) pour le maintien axial de la douille de serrage (H), ainsi que comme moyen d'étanchéité contre la sortie d'agent réfrigérant et/ou la pénétration de saletés.

9. Elément de blocage suivant l'une quelconque au moins des revendications 1 à 3, 5 et 7, caractérisé en ce que la douille de serrage (H) présente sur un côté frontal, en un point externe périphérique (22) de préférence, la denture périphérique (23) avec des crêtes de dents axiales (11), et en ce que l'alésage de cylindre (Z) présente sur l'extrémité d'emmanchement un élargissement (9) avec la contre-denture (10), avec laquelle engrène la denture périphérique (23), pour une fermeture à peu près de niveau entre le côté frontal de la douille de serrage (H) et le côté frontal (8) du corps de base (G).

10. Elément de blocage suivant l'une au moins des revendications 1 à 3, 5, 7, 9, caractérisé en ce que la douille de serrage (H) présente un collet côté frontal, recouvrant vers l'extérieur l'extrémité d'emmanchement de l'alésage de cylindre (Z), ce collet comportant la denture (23) périphérique composée d'une au moins des fentes radiales (21) ouvertes vers l'extérieur, prévues à distances angulaires régulières, comprises entre 10 et 30° de préférence, et en ce que la goupille axiale est montée dans le côté frontal (8) du corps de base (G) et s'engage avec un ajustement fin dans chaque fente radiale.

11. Elément de blocage suivant l'une au moins des revendiacations 1 à 10, caractérisé en ce qu'un corps de butée longitudinale (24) est prévu dans le corps de base (G), dans un trou de passage (4) central, qui prolonge l'alésage de cylindre (Z), et en ce que le corps de butée longitudinale (24) est accouplé à un dispositif de réglage axial (V) actionnable de l'exterieur, monté latéralement dans le corps de base (G).

12. Elément de blocage suivant la revendication 11, caractérisé en ce que le corps de butée longitudinale (24) présente un trou interne (25) et, de préférence, sur son côté frontal tourné vers la douille de serrage (H), des fentes transversales (26) latérales pour l'agent réfrigérant, reliées au trou interne (25).

13. Elément de blocage suivant la revendication 11, caractérisé en ce que le dispositif de réglage axial (V) présente un piston rotatif (27) avec un axe de rotation à peu près radial par rapport au trou de passage (4), piston sur lequel est monté un entraîneur (28), excentré par rapport à l'axe de rotation du piston et s'engageant dans un évidement (29) du corps de butée longitudinale (24), et en ce que le piston rotatif (27) est supporté dans le sens radial et est pressé sous une tension initale contre le corps de butée longitudinale (24).

14. Elément de bocage suivant la revendication 13, caractérisé en ce que le piston rotatif (27) est supporté par une vis creuse (30), et en ce qu'un ressort (32), un ressort à disques de préférence, est disposé entre la boulon creux (30) et le piston rotatif (27).
